Europäisches Patentamt

European Patent Office

Office européen des brevets

(19)

(11) Numéro de publication: **0 020 257 B1**

## (12) FASCICULE DE BREVET EUROPEEN

(45) Date de publication du fascicule du brevet: **15.09.82**

(21) Numéro de dépôt: **80400735.9**

(22) Date de dépôt: **27.05.80**

(51) Int. Cl.³: **F 16 L 1/04**

(54) Dispositif pour la pose en J d'une canalisation sous-marine.

(30) Priorité: **01.06.79 FR 7914093**

(43) Date de publication de la demande:
**10.12.80 Bulletin 80/25**

(45) Mention de la délivrance du brevet:
**15.09.82 Bulletin 82/37**

(84) Etats contractants désignés:
**AT BE CH DE GB IT LI LU NL SE**

(56) Documents cités:
**FR - A - 1 532 570**
**FR - A - 2 310 515**

(73) Titulaire: **GAZ DE FRANCE**
**23, rue Philibert Delorme**
**F-75017 Paris (FR)**

(72) Inventeur: **Thome, Paul**
**8 rue Coutereau**
**F-92210 Saint-Cloud (FR)**

(74) Mandataire: **Lerner, François**
**5, rue Jules Lefebvre**
**F-75009 Paris (FR)**

EP 0 020 257 B1

Courier Press, Leamington Spa, England.

## Dispositif pour la pose en J d'une canalisation sous-marine

La présente invention a pour objet un dispositif pour la pose d'une canalisation sous-marine constituée d'éléments assemblés bout à bout à bord d'un transporteur tel qu'une plate-forme ou un navire équipé à cet effet, et dans lequel la canalisation est larguée sensiblement à la verticale au fur et à mesure de l'assemblage desdits éléments raccordés bout à bout à l'extrémité de la partie de la canalisation déjà larguée.

Le dispositif de l'invention a pour objet de permettre la pose d'une canalisation sous-marine selon la technique imaginée mais non encore employée de la pose dite en J. Selon cette technique, l'immersion de la canalisation se fait sensiblement à la verticale du navire poseur, la canalisation ne se courbant qu'à sa partie inférieure lorsqu'elle se pose sur le fond marin. Cette technique a l'avantage de réduire les contraintes mécaniques auxquelles est soumise la canalisation au moment de la pose, par comparaison à la technique de pose classique dite en S dans laquelle la canalisation est larguée sensiblement à l'horizontale à partir du navire.

Par contre, la technique de pose dite en J se heurte à de grosses difficultés que se propose de résoudre la présente invention.

Parmi ces difficultés, il faut noter l'amplitude des mouvements de déplacement verticaux du navire soumis à la houle et dont il faut affranchir la canalisation qui a déjà été posée. Une autre difficulté est relative à l'assemblage par soudure d'un élément de canalisation en bout de la partie déjà larguée. En effet, les éléments de canalisation que l'on assemblera à l'extrémité de la partie de canalisation déjà larguée ne pourront avoir qu'une longueur relativement limitée compte tenu du positionnement vertical de ces éléments qu'implique la technique de pose en J. Au contraire de cela, dans la technique dite en S, des éléments de canalisation pouvant faire toute la longueur du navire poseur peuvent être utilisés. Il en résulte que la technique de la pose en J nécessite si l'on veut pouvoir poser des longueurs raisonnables de canalisation par unité de temps un dispositif adapté qui permette un assemblage très rapide des éléments de canalisation à l'extrémité de la partie de canalisation déjà posée, une descente rapide de cet élément après assemblage et une mise en place non moins rapide d'un nouvel élément qui devra être assemblé à la suite du précédent.

Des dispositifs pour la pose en J de canalisations ont été imaginés dans lesquels on assemble bout à bout des éléments de canalisation que l'on fixe à l'extrémité émergeante sensiblement verticale de la canalisation déjà larguée et dans lesquels, pour effectuer les opérations d'assemblage et de largage, on utilise un mât de chargement susceptible de basculer entre une position sensiblement horizontale et une position sensiblement verticale et un mât de pose équipé de moyens de saisie et d'entraînement permettant de saisir et d'entraîner parallèlement à ce mât et sensiblement verticalement un élément de canalisation chargé sur lui; des moyens de commande desdits moyens de saisie et d'entraînement sont prévus qui sont susceptibles de faire descendre ledit élément de canalisation sous une tension sensiblement constante indépendamment du mouvement propre de pilonnement du transporteur et sensiblement dans l'axe de l'extrémité libre de la partie de la canalisation déjà larguée, ainsi que des moyens de saisie et de soutien de ladite extrémité, et des moyens de commande desdits moyens de soutien qui sont susceptibles de supporter ladite extrémité sous une tension sensiblement constante indépendamment du mouvement de pilonnement du transporteur.

De tels dispositifs ont fait l'objet de la description notamment des brevets FR—A - 2 310 515 et FR—A 1 532 570.

Le dispositif objet de l'invention pour la pose en *J* d'une canalisation est du type général précédemment décrit et se caractérise par rapport à lui en ce que, en vue de simplifier et accélérer les opérations de pose de la canalisation, le mât de chargement et le mât de pose sont confondus, et deux tels mâts sont prévus travaillant en alternance, susceptibles d'être couchés sensiblement horizontalement l'un dans une direction du transporteur, l'autre dans la direction opposée.

Un tel dispositif permet de s'affranchir pour les opérations de raccordement des éléments à la canalisation du mouvement de pilonnement du navire. Il permet également l'approvisionnement des éléments sur chaque mât de chargement en position horizontale, ce qui facilite les opérations de stockage et de manutention. En outre, les mâts peuvent travailler alternativement, l'un étant chargé en position horizontale, tandis que l'autre est en position verticale pour permettre l'assemblage d'un élément de canalisation à l'extrémité de la canalisation déjà posée et le largage de cet élément.

Selon une autre caractéristique de l'invention, les moyens précités de saisie et de soutien de ladite extrémité de canalisation se déplacement à l'intérieur d'une structure support solidaire du transporteur en étant guidés dans ladite structure par des moyens de guidage compensés en pilonnement. De cette façon, il est possible d'automatiser entièrement les opérations d'assemblage qui se font en l'absence de tout mouvement relatif entre l'extrémité libre de la canalisation, l'élément que l'on vient assembler en bout de cette canalisation et les appareils d'assemblage: poste de soudure, revêtement intérieur et extérieur, etc.

L'invention apparaîtra plus clairement à l'aide de la description qui va suivre faite en référence aux dessins annexés illustrant un mode de mise en oeuvre. Dans ces dessins:

— la figure 1 est un schéma illustrant un navire vu de côté équipé d'un dispositif de pose selon l'invention,

— la figure 2 montre le même navire vu de dessus.

— la figure 3 montre à plus grande échelle et de côté, schématiquement avec des pièces qui ont été enlevées pour plus de clarté diverses parties principales du dispositif.

— la figure 4 montre schématiquement comme la figure 1 une phase d'opération du dispositif.

— la figure 5 montre selon la flèche V de la figure 4 de la disposition relative des deux mâts de chargement des éléments de canalisation.

— les figures 6 et 7 montrent comme la figure 4 deux autres phases d'opération du dispositif.

— la figure 8 montre schématiquement selon la flèche VIII de la figure 4 le navire de pose vu de l'arrière.

— les figures 9 à 16 sont des schémas expliquant comment se fait l'approche et l'assemblage d'un élément de canalisation à l'extrémité libre de la canalisation déjà posée puis son largage en vue de la pose d'un nouvel élément supplémentaire.

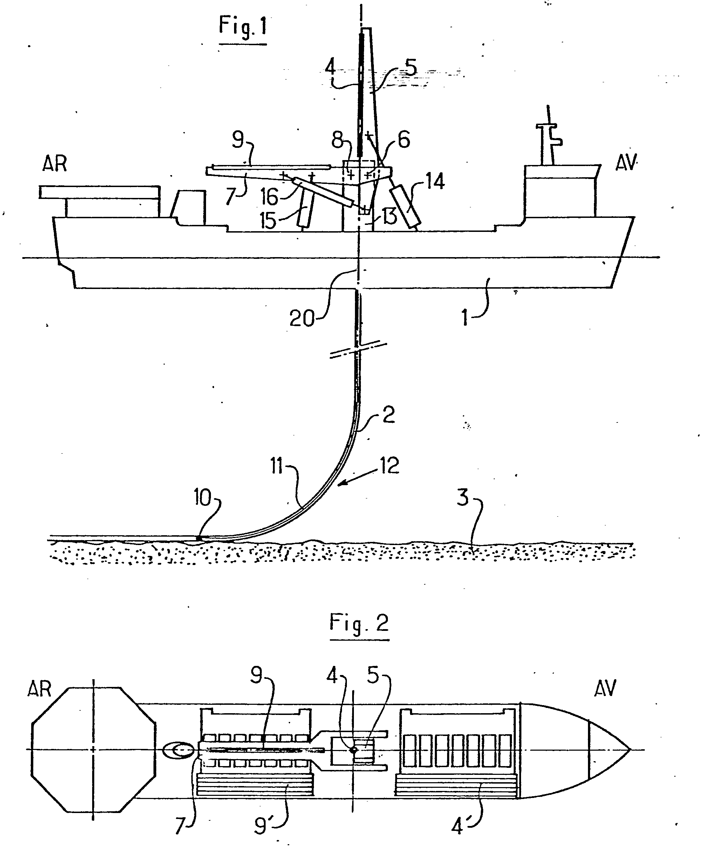

On se reportera tout d'abord à la figure 1 dans laquelle on aperçoit un navire 1 pour la pose dite en J d'une canalisation 2 sur le fond marin 3.

Selon cette technique, la canalisation 2 est constituée d'éléments de canalisation que l'on assemble bout à bout à l'extrémité de la partie de canalisation déjà larguée. Chaque nouvel élément tel que 4 est amené à cet effet en position sensiblement verticale au-dessus de l'extrémité de la partie de la canalisation 2 déjà larguée et selon son axe de façon à permettre l'assemblage du nouvel élément 4. Ce positionnement de l'élément 4 au-dessus et dans l'alignement de l'extrémité de la partie de canalisation 2 est réalisé au moyen d'un mât 5 susceptible de basculer autour d'un axe 6 et qui est équipé de moyens de saisie et d'entraînement de l'élément 4 de canalisation.

De façon à réduire les temps morts, un deuxième mât 7 qui bascule autour d'un axe 8 est susceptible, lorsque le mât 5 est en position verticale, d'être chargé en position horizontale d'un autre élément 9 de canalisation.

Lorsque l'élément 4 aura été assemblé comme il sera décrit plus loin à l'extrémité de la canalisation 2, on fera basculer le mât 5 vers la position horizontale tandis qu'on amènera le mât 7 en position verticale pour l'assemblage du nouvel élément de canalisation 9. Avantageusement, si le mât 5 est prévu pour basculer vers l'avant AV du navire, le mât 7 est prévu pour basculer vers l'arrière AR de sorte que les mâts de chargement des éléments de canalisation peuvent travailler en alternance.

Comme on le voit à la figure 2, les éléments 9 peuvent être chargés lorsque le mât 7 est en position horizontale à partir d'un magasin d'éléments 9', tandis que de même, les éléments 4 seront chargés sur le mât 5 lorsque ce dernier sera en position horizontale à partir d'un magasin d'éléments 4' en réserve sur le navire.

D'autre part, comme il sera expliqué plus loin, on prévoit à l'intérieur de la canalisation 2 un train d'équipements de sécurité et de mesure comprenant au moins un bouchon de sécurité 10 attaché en bout d'un câble 11, le bouchon 10 étant situé à quelque distance après la base du J formant le coude 12 de la canalisation.

Le bouchon 10 qui avance au fur et à mesure de la pose a pour objet d'empêcher la partie de canalisation déjà posée sur le fond marin 3 d'être noyée en cas de faute de manoeuvre ou de rupture de la partie en cours de pose notamment dans la zone la plus sollicitée du coude 12.

D'autre part, on notera à la figure 1 que les deux mâts 5, 7 sont articulés autour des axes 6, 8 sur une structure support 13 solidaire du navire 1. Les mouvements de pivotement des mâts 5, 7 sont commandés par des vérins 14, 15 et 16. Le vérin 14 est articulé entre le mât 5 et le navire, le vérin 15 entre le mât 7 et le navire, tandis que le vérin 16 relie les deux mâts 5, 7 en deux points pas trop éloignés des axes d'articulation 6, 8 ce qui assure une compensation partielle des efforts de relèvement et d'abaissement des mâts et permet d'alléger l'ensemble de la structure.

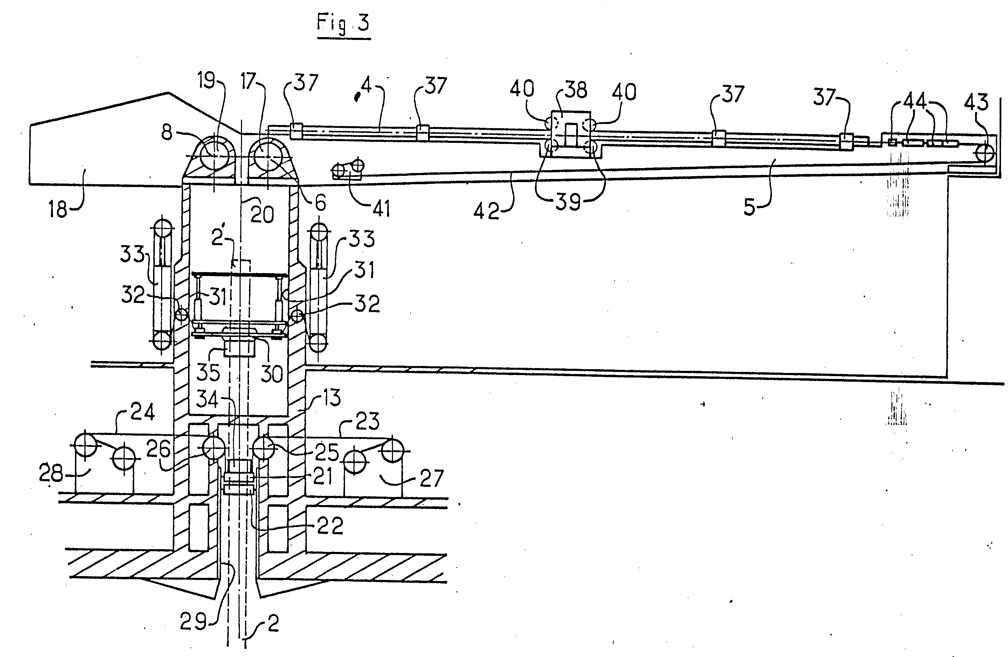

On se reportera à la figure 3 dans laquelle on aperçoit plus précisément le dispositif permettant l'assemblage des éléments de canalisation tels que 4 sur l'extrémité libre 2' de la partie de canalisation 2 déjà larguée.

Le mât 5 pivote autour de l'axe 6 d'un pivot 17 prenant appui sur la structure support 13. En 18, on aperçoit le contrepoids pour l'équilibrage partiel du mât.

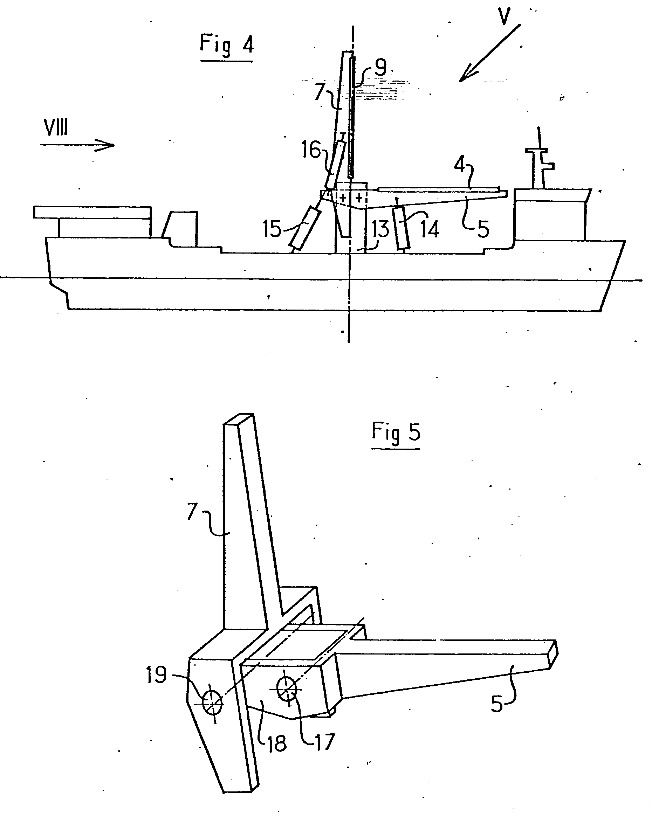

A la figure 5, on aperçoit la forme particulière en U de la base des deux mâts 5, 7 qui permet le libre pivotement des deux mâts autour de leurs pivots 17, 19 lors des mouvements de basculement opposés conjugués de ces deux mâts sur la structure support 13.

Dans l'exemple illustré, on voit que les axes 6, 8 des pivots 17, 19 sont décalés par rapport à l'axe 20 sensiblement vertical contenu dans le plan médian de ces deux axes et qui correspond à l'axe de pose et d'assemblage d'un élément 4 de canalisation en bout de l'extrémité 2' de la partie de canalisation 2 déjà constituée.

Pour éviter de soumettre la canalisation 2 à des contraintes intempestives, sa partie supérieure est fixée et soutenue par deux pinces respectivement 21, 22 qui travaillent habituellement alternativement. Ces pinces ont des configurations qui leur permettent de pincer et soutenir la canalisation 2 sans en abîmer le revêtement extérieur. Elles sont elles-mêmes soutenues par des câbles tels que 23, 24 qui passent sur des poulies de renvoi 25, 26 et qui s'enroulent sur des cabestans 27, 28. Ces cabestans sont d'un type connu permettant d'exercer sur les câbles 23, 24 des tensions sensiblement constantes. Cette mesure permet d'affranchir les pinces 21, 22 du mouvement de pilonnement du navire. Autrement dit, l'extrémité 2' de la canalisation 2 reste sensiblement à niveau constant par rapport au fond de la mer s'élevant ou s'abaissant à l'intérieur de la structure 13 ce que compense le mouvement de pilonnement du navire.

Les cabestans 27, 28 peuvent être entraînés par exemple par des moteurs à couple constant. En variante, un dispositif de mesure accélèromètre peut commander les moteurs des cabestans pour compenser le mouvement vertical de déplacement du navire dû à la houle.

Ces dispositifs qui sont d'un type connu existant dans le commerce ne seront pas décrits, ne faisant pas partie de l'invention.

Comme il apparaîtra plus loin, les deux pinces 21, 22 agissent en conjugaison pour permettre également la descente de la canalisation dans le puits 29 de largage après assemblage d'un élément de canalisation 4. A cet effet, la pince 21 dite pince "fixe" sert à maintenir à niveau sensiblement constant la canalisation 2 lorsque la pince 22 dite "mobile" n'est pas utilisée pour descendre la canalisation 2 de la longueur souhaitée et à la vitesse désirée. En utilisant alternativement l'une des pinces ou l'autre, on peut faire descendre de la longueur voulue la canalisation.

Sur la canalisation 2, est également prévue, indiquée en 30, une pince parachute qui est suspendue par des câbles 31 passant sur des poulies de renvoi 32 et tendus par des tensionneurs à vérin 33 qui assurent comme les cabestans 27, 28 une compensation du mouvement de pilonnement du navire. Ces tensionneurs sont également d'un type en soi connu à vérin hydraulique et réserve d'air sous pression. En fonctionnement normal, la pince parachute 30 suit la canalisation 2 permettant le mouvement de descente en pose normale de la canalisation après assemblage d'un élement 4. Par contre, elle vient bloquer la canalisation 2 en cas d'accélération brutale de celle-ci par exemple à la suite d'une faute de manoeuvre ou d'une fissure de la canalisation ayant conduit à un remplissage d'eau de celle-ci au-dessus du bouchin de sécurité 10 et à une augmentation de poids considérable consécutive. Bien entendu, on emploie autant de tensionneurs 33 et de cabestans 27, 28 que nécessaires, fonctionnant en parallèle, pour obtenir les efforts recherchés compte tenu de la profondeur de pose et du type de canalisations installées.

Avantageusement, sont en outre prévus à l'intérieur de la structure support 13, deux guides annulaires 34, 35 également compensés en pilonnement et dans lesquels passe la canalisation. Le guide 34 peut être solidaire de la pince fixe 21, tandis que le guide 35 peut être solidaire de la pince parachute 30. Ces guides peuvent être constitués par exemple par trois roues réparties angulairement autour de l'axe 20 et roulant sur le revêtement extérieur de la canalisation 2.

Comme on le voit à la figure 3, lorsqu'un élément tel que l'élément 4 de canalisation est chargé sur l'un des deux mâts 5 ou 7, l'élément 4 est mis en place et guidé à l'intérieur de guides, par exemple au nombre de quatre, repérés en 37 sur le dessin et permettant le déplacement de l'élément 4 parallèlement à l'axe du mât 5. Ces guides 37 peuvent être constitués par des roues réparties angulairement autour de la canalisation.

De cette façon, lorsque le mât 5 est en position verticale, cela permet de faire coincider exactement l'axe de l'élément 4 avec l'axe 20 d'assemblage.

Pour permettre le déplacement de l'élément de canalisation 4 sur le mât 5, on utilise avantageusement un dispositif connu 38 dit "tensionneur" et comprenant deux trains de roulement 39, 40 prenant appui de part et d'autre de la canalisation et roulant sans glissement sur son revêtement externe. Les roulements 39, 40 sont commandés par des moteurs qui permettent de faire glisser l'élément 4 parallèlement à l'axe du mât 5 à la vitesse commandée par les moteurs.

Avantageusement, ces moteurs sont comme les moteurs des cabestans 27, 28 des moteurs à couple constant permettant en position verticale du mât, d'affranchir automatiquement l'élément 4 du mouvement de pilonnement auquel est soumis le navire et le mât 5. Ainsi, le tensionneur 38 assure la compensation automatique en pilonnement de l'élément 4 et permet d'approcher et d'assembler facilement l'élément 4 à l'extrémité 2' de la canalisation 2 elle-même compensée en pilonnement comme il a été dit précédemment.

L'assemblage se fait après rapprochement de l'élément 4 jusqu'à venir en contact avec l'extrémité 2' de la canalisation, mouvement de rapprochement qui est obtenu par une commande correspondante du tensionneur 38.

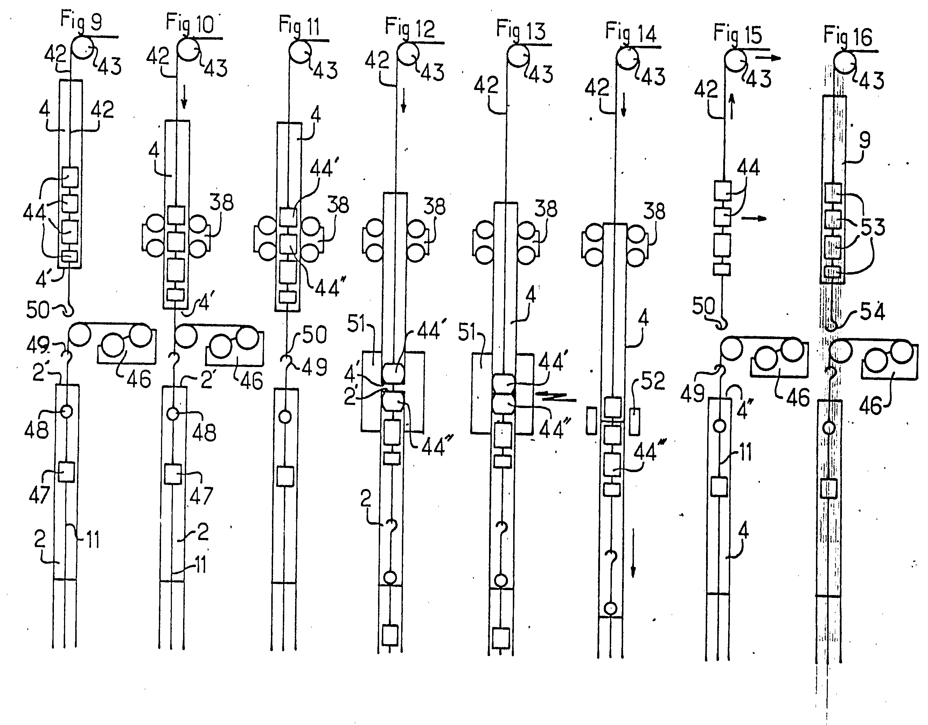

A la figure 3, on aperçoit également un cabestan 41 fixé au mât 5 et sur lequel s'enroule un câble 42 qui reçoit après passage sur une poulie de renvoi 43 un train d'équipements schématisé en 44 qui sera introduit dans l'élément de canalisation 4 comme il sera décrit en référence aux figures 9 à 16.

Le moteur du cabestan 41 sera lui aussi avantageusement du type à couple constant ce qui permettra d'obtenir une compensation automatique du mouvement de pilonnement du train 44 suspendu au câble 42 dans la position verticale du mât 5.

On décrira maintenant en référence aux figures 9 à 16 les opérations permettant l'assemblage à l'extrémité 2' de la partie de canalisation 2 déjà réalisé d'un nouvel élément tel que 4 dressé en position sensiblement verticale dans l'alignement de l'axe de pose 20 de la canalisation.

Sur les figures 9 à 16, on n'a pas représenté de façon à ne pas surcharger le dessin le navire ni le mât de charge 5. Bien entendu, l'élément 4 est supporté sur le mât 5 en étant guidé par les guides 37 (figure 3), en étant compensé en pilonnement par le tensionneur 38, lequel sert également à rapprocher l'élément 4 de l'extrémité 2' sur lequel l'élément doit être assemblé.

Dans un premier temps, comme illustré à la figure 9, l'élément 4 est maintenu sur le mât 5 en position haute sensiblement comme représenté à la figure 1. Une distance relativement importante sépare l'extrémité basse 4' de l'élément 4 de l'extrémité 2' haute de la partie de canalisation 2 déjà constituée. Ces deux parties étant compensées en pilonnement, comme il a été indiqué précédemment, peuvent être considérées comme sensiblement immobiles en niveau absolu et également relativement l'une par rapport à l'autre.

En conséquence, elles se déplacement d'un même mouvement relatif à l'intérieur de la structure 13 (figure 3).

Dans cette position relative et illustrée à la figure 9 des éléments de canalisation, on fait descendre par le treuil 41 (figure 3) suspendu au câble 42 après renvoi sur la poulie 43 d'extrémité du mât 5, le train d'équipements 44 à l'intérieur de l'élément 4. Ce train d'équipements comprend un certain nombre d'appareillages nécessaires à la sécurité, à la mesure et à la réalisation d'un bon assemblage sur l'extrémité 2' de la canalisation.

Comme il a été expliqué précédemment, le treuil 41 permet la compensation du mouvement de pilonnement du train d'équipements 44, ce qui fait que le train 44 est sensiblement immobile par rapport à l'élément 4 lui-même compensé en pilonnement, lorsque l'on ne commande pas le treuil 41 en mouvement d'abaissement du train 44.

Dans la phase d'opérations illustrée à la figure 9, le train d'équipements interne de la canalisation qui comprend notamment le câble 11 (figure 1) et le bouchon de sécurité 10, ainsi que d'autres appareils de sécurité et de mesure tels que 47, 48 qui ne seront pas décrits car ne faisant pas partie de l'invention, est pris en charge par un treuil 46 qui peut être fixé et supporté par la structure 13. Ce treuil 46 est également d'un type permettant l'application d'un couple constant et donc la compensation automatique du mouvement de pilonnement du câble 11 supportant le train d'équipement interne.

De cette façon, les deux extrémités schématisées par des crochets 49, 50 des câbles 11 et 42 tous deux compensés en pilonnement sont immobiles relativement l'un par rapport à autre tant que l'on ne commande pas un abaissement ou un relèvement de ces câbles par les treuils 41 ou 46.

Dans ces conditions, il est facile par exemple par commande du treuil 41 d'amener les deux crochets 50, 49 en coïncidence (figure 10) et de prendre ainsi en charge par le treuil 41 l'équipement 44 et l'équipement interne de la canalisation comprenant le câble 11, le bouchon 10 de sécurité et au moins un élément de sécurité complémentaire tel par exemple que l'élément 47 formant parachute destiné à bloquer et arrêter le câble 11 automatiquement dans la canalisation 2, par exemple en cas d'erreur de manoeuvre à l'accostage des crochets 49, 50.

Le treuil 46 peut alors être écarté tandis que simultanément ou ultérieurement, l'élément 4 peut être abaissé vers l'extrémité 2' par commande du tensionneur 38 (figures 10, 11 et 12).

Simultanément, comme il apparaît de la comparaison des figures 11 et 12, on commande l'abaissement par le câble 42 du train d'équipements de façon à amener les éléments 44', 44" du train d'équipements sensiblement au niveau (figure 12) de la ligne de jonction où sera réalisé l'assemblage de l'extrémité 4' de l'élément 4 sur l'extrémité 2' de la canalisation 2. Les éléments 44', 44" sont avantageusement des éléments gonflables qui permettront un centrage automatique précis de l'extrémité 4' de l'élément 4 sur l'extrémité 2' de la canalisation 2.

L'accostage parfait étant réalisé, il sera alors aisé de réaliser l'assemblage de l'élément 4 sur la canalisation 2 au moyen d'une machine automatique à souder 51 qui réalisera par exemple une soudure à la jonction des extrémités 4', 2'. La machine 51 sera supportée par un treuil compensé en pilonnement (non représenté) et sera solidarisé de la canalisation au moment de la réalisation de la soudure, ce qui assurera une position relative parfaitement immobile de la machine à souder 51 sur la canalisation. Le soudage, une fois réalisé, la machine 51 à souder sera écartée et l'on pourra procéder au moyen d'un appareillage schématisé en 52, fixé à la canalisation à la confection du revêtement de protection externe de la canalisation.

Egalement, à ce moment, peut être réalisé le revêtement interne par exemple au moyen de l'un des appareillages tel que 44''' du train d'équipements 44.

A partir de ce moment, et comme illustré à la figure 14, on voit que l'élément 4 de canalisation va être lâché par le tensionnneur 38 et que l'on commence à faire descendre l'ensemble de la canalisation 2 de la longueur de l'élément 4 qui vient d'être posé. Cette descente se fait comme il a été dit précédemment par la pince mobile 22 après ouverture de la pince 21 qui laisse filer la canalisation à la vitesse de descente commandée par le mouvement de la pince mobile 22. Ce mouvement de descente peut se faire selon la course de déplacement de la pince mobile 22 et la longueur des éléments 4 chargés en une ou plusieurs opérations alternatives de montée et descente de la pince 22. Si plusieurs mouvements alternatifs sont nécessaires, on fait d'abord descendre la pince mobile 22, la pince 21 étant ouverte, après quoi, on referme la pince 21 pour immobiliser et soutenir la canalisation, on remonte la pince mobile, on la referme sur la canalisation à la suite de quoi, on peut, après ré-ouverture de la pince fixe 21 faire descendre à nouveau la canalisation.

On arrête le mouvement de descente de la canalisation lorsque l'extrémité supérieure 4″ de l'élément 4 assemblé sur la canalisation 2 vient au niveau où se trouvait précédemment (figure 9) l'extrémité 2′ de la canalisation. Dans cette position illustrée à la figure 15, on a également pris soin de remonter par le treuil 41 et le câble 42 le train d'équipements de façon à pouvoir libérer le crochet 49 du crochet 50 après reprise en charge du câble 11 supportant l'équipement interne de canalisation par le treuil 46.

Après quoi, il est possible d'écarter le train d'équipements 44 et d'approcher (figure 16) un nouvel élément de canalisation tel que l'élément 9 préalablement préparé sur le mât 7 avec son train d'équipement interne 53 se terminant par le crochet 54 en vue de la répétition des phases opératoires décrites aux figures 9 à 15.

La prévision des deux mâts permet, comme schématisé aux figures 4 à 8, un chargement sur l'un des mâts en position horizontale des éléments de canalisation lorsque l'autre mât est en position verticale en vue de l'assemblage d'un élément de canalisation sur la partie déjà posée. Une telle phase est illustrée à la figure 4 dans laquelle le mât 7 supporte un élément de canalisation 9 qui va être posé, tandis qu'on charge sur le mât 5 en position horizontale un nouvel élément 4.

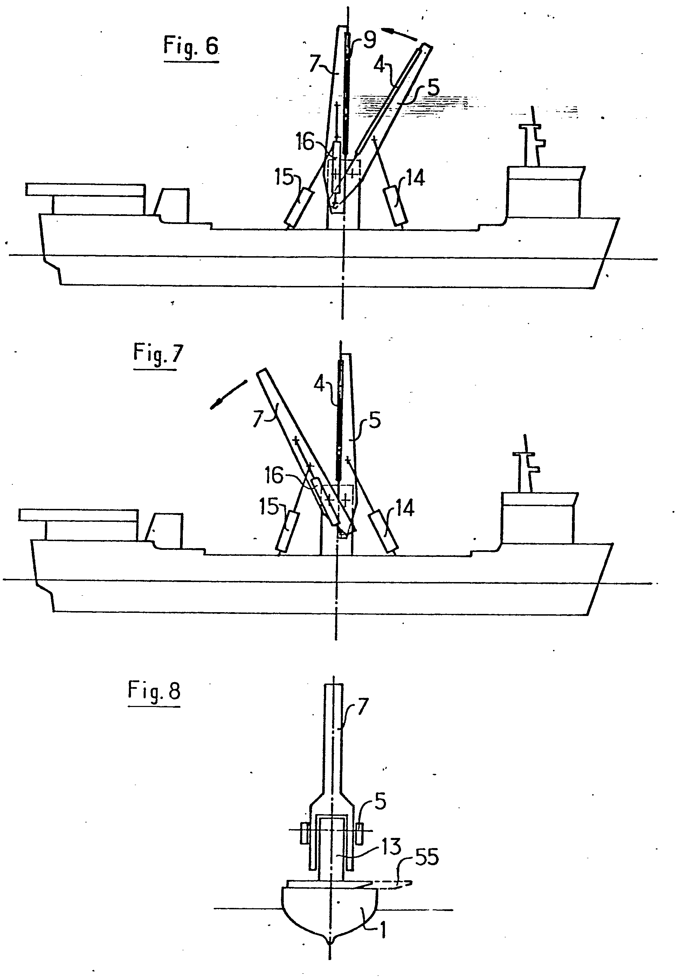

La figure 6 illustre la phase correspondant à la fin d'opération d'assemblage de l'élément 9, le mât 5 ayant été déjà relevé prêt à prendre la place du mât 7.

A la figure 7, est illustrée la phase suivante durant laquelle le mât 7 s'abaisse vers la position horizontale pour recevoir un nouvel élément 9, tandis que le mât 5 a été dressé à la position verticale en vue de l'assemblage de l'élément 4 en bout de la canalisation déjà constituée. Le jeu des trois vérins 14, 15, 16 permet de commander toutes les positions relatives souhaitées des mâts.

A la figure 8, on aperçoit, de côté, qu'on peut prévoir des plate-formes latérales escamotables telles que 55 permettant le stockage d'un grand nombre d'éléments tels que 4′, 9′ (figure 2) en réserve.

De nombreuses variantes peuvent être apportées aux modes de mise en oeuvre et d'opérations décrits.

Ainsi, par exemple, les deux mâts basculant en alternance sont utilisés avantageusement lorsque les éléments de canalisation assemblés font quelques dizaines de mètres, chaque élément pouvant être constitué par exemple par trois ou quatre longueurs unitaires de canalisation déjà pré-assemblées.

Si les éléments sont plus courts, il peut être éventuellement avantageux de n'utiliser qu'un seul mât auquel sera associé un magasin chargeur automatique susceptible de charger sur le mât plusieurs éléments, par exemple une dizaine et de les délivrer au tensionneur 38 après chaque opération d'assemblage et de descente d'un élément de canalisation.

L'invention peut être utilisée avantageusement pour la pose de canalisations sous-marines de gaz, ou de liquides et notamment des hydrocarbures.

On notera qu'en cas d'incident, par exemple de fissuration de la partie de canalisation en voie d'être posée, notamment dans la région du coude du J, on peut avoir brutalement un très gros accroissement du poids de la canalisation que les pinces 21, 22 ne peuvent support.

A ce moment, entre en jeu la pince parachute 30 qui empêche la chute de toute la canalisation.

Pour retirer la canalisation et la remonter jusqu'à une partie saine, on peut alors utiliser en conjugaison avec la pince parachute une pince spéciale de récupération sur laquelle on peut faire agir tous les cabestans 27, 28 en parallèle pour obtenir l'effort de remontée nécessaire. Cette pince de récupération peut être de n'importe quel type approprié pouvant s'ancrer profondément dans le revêtement extérieur du tronçon de canalisation qu'on remonte et qui est de toute façon perdu.

Dans la description qui précède, on a expliqué que l'axe de largage de la canalisation à partir du navire était sensiblement vertical. Ceci correspond au principe de la pose dite en J. En fonction de la profondeur de pose qui peut varier selon les cas et selon les points d'un trajet de pose, on peut avoir avantage à faire varier également l'inclinaison de l'axe de largage, cet axe étant d'autant plus proche de la verticale que la profondeur de pose est importante. A cet effet, l'invention peut prévoir tout moyen (non représenté) permettant de modifier légèrement la direction de cet axe.

## Revendications

1. Dispositif pour la pose d'une canalisation sous-marine (2) constituée d'éléments assemblés bout à bout à bord d'un transporteur tel qu'une plateforme ou un navire (1) équipé à cet effet et dans lequel la canalisation (2) est larguée sensiblement à la verticale au fur et à mesure de l'assemblage desdits éléments raccordés bout à bout à l'extrémité de la partie de la canalisation déjà larguée, ledit dispositif étant du type comprenant au moins un mât de chargement susceptible de basculer entre une position sensiblement horizontale et une position sensiblement verticale, au moins un mât de pose équipé de moyens de saisie et d'entraînement permettant de saisir et d'entraîner parallèlement à ce mât et sensiblement verticalement un élément (4, 9) de canalisation chargé sur lui, des moyens de commande desdits moyens de saisie et d'entraînement susceptibles de faire descendre ledit élément de canalisation sous une tension sensiblement constante indépendamment du mouvement propre de pilonnement du transporteur et sensiblement dans l'axe de l'extrémité libre de la partie de la canalisation (2) déjà larguée, des moyens de saisie et de soutien (21, 22) de ladite extrémité, ainsi que des moyens de commande desdits moyens de soutien susceptibles de supporter ladite extrémité sous une tension sensiblement constante indépendamment du mouvement de pilonnement du transporteur, ledit dispositif étant caractérisé en ce qu'en vue de simplifier et accélérer les opérations de pose de la canalisation (2), le mât de chargement et le mât de pose sont confondus, et deux tels mâts (5, 7) sont prévus travaillant en alternance, susceptibles d'être couchés sensiblement horizontalement l'un dans une direction du transporteur, l'autre dans la direction opposée.

2. Dispositif selon la revendication 1, caractérisé en ce que les moyens précités de saisie et de soutien (21, 22) de ladite extrémité de canalisation se déplacent à l'intérieur d'une structure support (13) solidaire du transporteur en étant guidés dans ladite structure par des moyens de guidage (34, 35) compensés en pilonnement.

3. Dispositif selon la revendication 2, caractérisé en ce que les deux mâts précités (5, 7) sont articulés sur ladite structure support (13).

4. Dispositif selon l'une des revendications précédentes, caractérisé en ce que chacun des deux mâts (5, 7) est commandé en déplacement entre l'horizontale et l'axe de pose par au moins un vérin (14, 15) ou analogue prenant appui sur le transporteur ou ladite structure support (13), et au moins un autre vérin (16) relie les deux mâts (5, 7) en deux points voisins de leurs axes d'articulation (6, 8).

5. Dispositif selon l'une des revendications précédentes, caractérisé en ce que les deux mâts (5, 7) précités sont articulés autour de deux axes parallèles (6, 8) faiblement distants et des moyens de guidage (38, 39, 40) solidaires de chaque mât assurent en conjugaison avec les moyens précités de saisie et d'entraînement desdits éléments de canalisation le déplacement de ces éléments chargés sur le mât selon une direction (20) commune par rapport à ladite structure support (13) et passant entre lesdits deux axes (6, 8) lorsque l'un ou l'autre des mâts est en position sensiblement verticale pour la mise en place d'un dit élément à l'extrémité de ladite partie de canalisation (2) déjà posée.

6. Dispositif selon l'une des revendications précédentes, caractérisé en ce que les moyens de saisie et de soutien de ladite extrémité de canalisation comprennent deux pinces (21, 22) guidées au moins en partie à l'intérieur de ladite structure support (13) et compensées en pilonnement, lesdites pinces étant susceptibles d'agir alternativement pour saisir et retenir ou pour lâcher ladite canalisation, l'une au moins de ces pinces (22) pouvant être commandée en mouvement d'abaissement et de relèvement.

7. Dispositif selon l'une des revendications précédentes, caractérisé en ce que les moyens de saisie et de soutien de ladite extrémité de canalisation comprennent une pince de sécurité (30) fixe compensée en pilonnement à l'intérieur de ladite structure support (13).

8. Dispositif selon l'une des revendications précédentes, caractérisé en ce qu'il comprend, équipant chaque mât (5, 7) au moins un treuil (41) susceptible de retenir un câble (42) soutenant à l'intérieur de la canalisation un train d'équipements (44, 53) et compensant les mouvements de pilonnement du transporteur.

9. Dispositif selon la revendication 8, caractérisé en ce qu'au moins un treuil (46) est prévu sur la structure support (13) pour soutenir ledit train d'équipement (44, 53) et le compenser en pilonnement après chaque mise en place d'un nouvel élément à ladite extrémité de la canalisation et remontée d'une partie du train d'équipements associé à la pose de chaque élément.

10. Dispositif selon l'une des revendications précédentes, caractérisé en ce que les moyens d'assemblage (51, 52) des éléments à l'extrémité libre de la canalisation sont compensés en pilonnement et son fixés sur ladite canalisation lors des opérations d'assemblage.

**Claims**

1. Apparatus for the positioning of a submarine channel (2) comprising elements assembled end-to-end on board a transporter such as a platform or a ship (1) equipped for this purpose and in which the channel (2) is gradually released in a substantially vertical direction during the course of assembly of the said elements which are connected end-to-end to the extremity of the part of the channel which has already been released, the said apparatus being of the type comprising at least one loading mast capable of swinging between a substantially horizontal position and a substantially vertical position, at least one positioning mast equipped with engagement and displacement means which permits a channel elements (4, 9) loaded on to it to be engaged and displaced in a direction parallel to it and substantially vertically, control means for the said engagement and displacement means capable of lowering the said channel element under a substantially constant tension independent of pounding movements of the transporter and substantially coaxial with the free end of the part of the channel (2) which has already been released, gripping and supporting (21, 22) means for the said end, as well as control means for the said gripping and supporting means which are capable of supporting the said end under a substantially constant tension independent of pounding movements of the transporter, the said apparatus being characterised in that in order to simplify and accelerate the operations in positioning the channel, the loading mast and the positioning mast are merged, and two such masts (5, 7) are provided to operate alternately, these masts being capable of being arranged substantially horizontally, one in a direction of the transporter and the other in the opposite direction.

2. Apparatus according to claim 1, characterised in that the said engagement and support means (21, 22) for the said extremity of the channel are displaced to the inside of a support structure (13) rigid with the transporter and are guided within the said structure by guide means (34, 35) compensated for pounding.

3. Apparatus according to claim 2, characterised in that the said two masts (5, 7) are pivotally mounted on the said support structure (13).

4. Apparatus according to any of the preceding claims, characterised in that displacement of each of the two masts (5, 7) between the horizontal and the positioning axis is controlled by at least one jack (14, 15) or the like which acts on the transporter or the said support structure (13), and at least one other jack (16), connecting the two masts (5, 7) at two neighbouring points on their pivot axes (6, 8).

5. Apparatus according to any of the preceding claims, characterised in that the said two masts (5, 7) are pivoted on two parallel axes (6, 8) a small distance apart and guide means (38, 39, 40) rigid with each mast assure, in conjunction with the said engagement and displacement means for the said channel elements, the displacement of these elements loaded onto the mast in a common direction (20) with reference to the said support structure (13) and passing between the two axes (6, 8) when one or other of the masts is in a substantially vertical position, for locating one of the said elements at the end of the said part of the channel (2) which has already been positioned.

6. Apparatus according to any of the preceding claims, characterised in that the means for engaging and supporting the said end of the channel comprise two jaws (21, 22) guided within at least part of the interior of the said support structure (13) and compensated for pounding, the said jaws being capable of acting alternately to grip and hold or release the said channel, raising and lowering movements of at least one of these jaws (22) being capable of being controlled.

7. Apparatus according to any of the preceding claim, characterised in that the means for gripping and supporting the said end of the channel comprise a fixed safety gripper (30) compensated for pounding, inside the said support structure (13).

8. Apparatus according to any of the preceding claims, characterised in that it includes at least one winch (41) associated with each mast (5, 7) and capable of retaining a cable (42) supporting in the interior of the channel a series of devices (44, 53) and compensating for pounding movements of the transporter.

9. Apparatus according to claim 8, characterised in that at least one winch (46) is provided on the support structure (13) in order to support the said series of devices (44, 53) and to compensate for pounding after each positioning operation of a new element at the said extremity of the channel and raising operation of a part of the series of devices associated with the positioning of each element.

10. Apparatus according to any of the preceding claims, characterised in that the assembly means (51, 52) for the elements at the free end of the channel are compensated for pounding and are fixed on the said channel at the time of the assembly operations.

**Patentansprüche**

1. Vorrichtung zum Ablegen einer unterseeischen Leitung (2) bestehend aus stirnseitig an Bord einer Transporteinrichtung zusammengefügten Elementen, wobei es sich bei der Transporteinrichtung beispielsweise um eine hierzu ausgerüstete Plattform oder ein Schiff (1) handeln kann, und wobei die Leitung (2) im wesentlichen vertikal mit fortschreitender Montage dieser stirnseitig an das Ende des Teils der bereits abgelegten Leitung abgelegt wird, von der Bauart mit wenigstens einem Lademast, der in der Lage ist, zwischen einer im wesentlichen horizontalen Stellung und einer im wesentlichen vertikalen Stellung zu verkippen, wenigstens einem Ablegemast, der mit Greif- und Antriebseinrichtungen versehen ist, die es erlauben, parallel zum Mast und im wesentlichen vertikal ein an ihm vorgesehenes Leitungselement (49) zu ergreifen und mitzunehmen; Einrichtungen zur Steuerung der Greif- und Antriebseinrichtungen, die in der Lage sind, dieses Leitunselement unter einer im wesentlichen konstanten Spannung unabhängig von der Eigenstampfbewegung der Transporteinrichtung und im wesentlichen in der Achse des freien Endes des Teils der bereits abgelegten Leitung (2) abzusenken; Greif- und Stützeinrichtungen (21, 22) für dieses Ende sowie Steuereinrichtungen für diese Stützeinrichtungen, die in der Lage sind, dieses Ende unter einer im wesentlichen konstanten Spannung unabhängig von der Stampfbewegung der Transporteinrichtung abzustützen, dadurch gekennzeichnet, daß zur Vereinfachung und Beschleunigung des Ablegevorgangs für die Leitung (2) der Lademast und der Ablegemast zusammenfallen; und daß die beiden Masten (5, 7) abwechselnd arbeitend vorgesehen sind und in der Lage sind, im wesentlichen horizontal, der eine in der einen Richtung der Transporteinrichtung, der andere in der entgegengesetzten Richtung, umgelegt zu werden.

2. Vorrichtung nach Anspruch 1, dadurch gekennzeichnet, daß die genannten Greif- und Stützeinrichtungen (21, 22) für dieses Leitungsende sich im Innern einer Trägerkonstruktion (13) bewegen, die fest mit der Transporteinrichtung verbunden ist, indem sie in dieser Konstruktion durch hinsichtlich der Stampfbewegungen kompensierte Führungseinrichtungen (34, 35) geführt sind.

3. Vorrichtung nach Anspruch 2, dadurch gekennzeichnet, daß die beiden genannten Masten (5, 7) an der Trägerkonstruktion (13) gelenkig sind.

4. Vorrichtung nach einem der vorhergehenden Ansprüche, dadurch gekennzeichnet, daß jeder der beiden Masten (5, 7) bei seiner Bewegung zwischen der Horizontalen und der Ablegeachse durch wenigstens einen Stellzylinder (14, 15) oder dergleichen gesteuert ist, der sich gegen die Transporteinrichtung oder gegen die Stützkonstruktion (13) abstützt, und daß wenigstens ein weiterer Stellzylinder (16) die beiden Masten (5, 7) an zwei benachbarten Punkten ihrer Gelenkachse (6, 8) verbindet.

5. Vorrichtung nach einem der vorhergehenden Ansprüche, dadurch gekennzeichnet, daß die beiden genannten Masten (5, 7) um zwei parallele unter geringem Abstand stehende Achsen (6, 8) gelenkig sind; und daß fest mit jedem Mast verbundene Führungseinrichtungen (38, 39, 40) abgestimmt mit den genannten Greif- und Antriebseinrichtungen für diese Leitungselemente, für die Bewegung dieser am Mast vorgesehenen Elemente längs einer gemeinsamen Richtung (20) bezogen auf die Trägerkonstruktion (13) sorgen und laufen zwischen diesen Achsen (6, 8) durch, wenn der eine oder andere der Masten sich in im wesentlichen vertikaler Lage zur Anbringung eines solchen Elementes am Ende des bereits verlegten Leitungsteils (2) befindet.

6. Vorrichtung nach einem der vorhergehenden Ansprüche, dadurch gekennzeichnet, daß die Greif- und Stützeinrichtungen für dieses Leitungsende zwei Klemmschuhe (21, 22) umfassen, die wenigstens zum Teil im Innern der Trägerkonstruktion (13) und hinsichtlich der Stampfbewegung ausgeglichen sind, wobei die Klemmschuhe abwechselnd wirkend ausgebildet sind, um diese Leitung zu erfassen und zu halten oder um sie freizugeben, wobei wenigstens einer dieser Klemmschuhe (22) hinsichtlich einer Senk- und Hubbewegung steuerbar ist.

7. Vorrichtung nach einem der vorhergehenden Ansprüche, dadurch gekennzeichnet, daß die Greif- und Stützeinrichtungen für dieses Leitungsende einen hinsichtlich der Stampfbewegung abgeglichenen festen Sicherheitsklemmschuh (30) im Innern der Trägerkonstruktion (13) umfassen.

8. Vorrichtung nach einem der vorhergehenden Ansprüche, gekennzeichnet als Ausstattung jedes Mastes (5, 7) durch wenigstens eine Winde (41), die in der Lage ist, ein Seil (42) zu halten, welches im Innern der Leitung einer Anordnung von Organen (44, 53) abstützt, und die Stampfbewegungen der Transporteinrichtung ausgleicht.

9. Vorrichtung nach Anspruch 8, dadurch gekennzeichnet, daß wenigstens eine Winde (46) auf der Stützkonstruktion (13) vorgesehen ist, um diese Gruppe von Organen (44, 53) abzustützen und hinsichtlich der Stampfbewegung auszugleichen, nachdem ein neues Element am Ende der Leitung angebracht ist und ein Teil der dem Ablegen jedes Elementes zugeordneten Organgruppe angehoben ist.

10. Vorrichtung nach einem der vorhergehenden Ansprüche, dadurch gekennzeichnet daß die Montageeinrichtungen (51, 52) für diese Elemente am freien Ende der Leitung hinsichtlich der Stampfbewegung ausgeglichen und an der Leitung bei Montagevorgängen befestigt sind.

**0 020 257**

Fig.1

Fig. 2

Fig 3

Fig 4

VIII →

V

9

7

16

4

15    13    14    5

Fig 5

7

19    18    17    5

Fig. 6

7  9  4  5

16  15  14

Fig. 7

4  7  5

16  15  14

Fig. 8

7  5  13  55  1

4

Fig 9    Fig 10    Fig 11    Fig 12    Fig 13    Fig 14    Fig 15    Fig 16

0 020 257